(19) Europäisches Patentamt / European Patent Office / Office européen des brevets

(11) **EP 2 418 797 B1**

(12) **EUROPEAN PATENT SPECIFICATION**

(45) Date of publication and mention
of the grant of the patent:
**12.02.2020 Bulletin 2020/07**

(51) Int Cl.:
*H04L 1/00* *(2006.01)*

(21) Application number: **11177509.4**

(22) Date of filing: **12.08.2011**

(54) **Method for multiplexing uplink control information on a physical uplink shared channel**

Verfahren zum Multiplexing der Uplink-Steuerungsinformation auf einem physikalischen gemeinsam genutzten Uplink-Kanal

Procédé pour le multiplexage d'informations de contrôle en liaison montante sur un canal physique partagé en liaison montante

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: **13.08.2010 US 373587 P**
**08.07.2011 PCT/US2011/043278**

(43) Date of publication of application:
**15.02.2012 Bulletin 2012/07**

(73) Proprietor: **ZTE (USA), Inc.**
**Iselin NJ 08830 (US)**

(72) Inventor: **Shupeng, Li**
**Morristown, NJ 07960 (US)**

(74) Representative: **Boult Wade Tennant LLP**
**Salisbury Square House**
**8 Salisbury Square**
**London EC4Y 8AP (GB)**

(56) References cited:
**US-A1- 2003 081 692    US-A1- 2010 080 176**

- SHARP: "Codeword and symbol length determination for UCI multiplexing on the PUSCH with SU-MIMO", 3GPP DRAFT; R1-103722, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628, 22 June 2010 (2010-06-22), XP050449153, [retrieved on 2010-06-22]

- SAMSUNG: "Discussion on Data and Control Multiplexing in UL MIMO Transmissions", 3GPP DRAFT; R1-102212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, R1-10221, 12 April 2010 (2010-04-12), XP002663259, Beijing, China

- ZTE: "UCI Multiplexing on PUSCH with MIMO Transmission", 3GPP TSG-RAN WG1 MEETING #61BIS, vol. RAN WG1, no. R1-103601, 28 June 2010 (2010-06-28), XP002668094, Dresden, Germany

- NOKIA SIEMENS NETWORKS, NOKIA: "UCI transmission on PUSCH with SU-MIMO", 3GPP TSG-RAN WG1 MEETING #60BIS, vol. RAN WG1, no. R1-101905, 12 April 2010 (2010-04-12), XP002668095, Beijing, P.R. China

- "3rd Generation Partnership Project; Technical Specification Group Radio Access Network; Evolved Universal Terrestrial Radio Access (E-UTRA); Multiplexing and channel coding (Release 9)", 3GPP STANDARD; 3GPP TS 36.212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 31 May 2010 (2010-05-31), pages 1-61, XP050441487, [retrieved on 2010-05-31]

- **TEXAS INSTRUMENTS: "Remaining Issues on UCI Multiplexing for UL MIMO", 3GPP DRAFT; R1-103706 TI UCI MULTIPLEX V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628, 22 June 2010 (2010-06-22), XP050449140, [retrieved on 2010-06-22]**

**Description**

FIELD OF THE INVENTION

The field of the present invention is wireless communication and more specifically, uplink control information in a Long Term Evolution Advanced system.

BACKGROUND

The Third Generation Partnership Project ("3GPP") has specified Evolved Universal Terrestrial Radio Access ("E-UTRA") for support of wireless broadband data service. E-UTRA is also known as Long Term Evolution ("LTE") and is a standard in mobile network technology. 3GPP uses a system of parallel releases to provide a stable platform for implementation and allows for the addition of new features.
Long Term Evolution Advanced ("LTE-A") started in 3GPP. The Technical Specification Group - Radio Access Network Working Group 1 ("TSG-RAN WG1") is responsible, in part, for the specification of the physical layer of a radio interface for user equipment ("UE"), a Universal layer of a radio interface for user equipment ("UE"), a Universal Terrestrial Radio Access Network ("UTRAN"), and an Evolved UTRAN; covering both frequency division duplexing ("FDD") and time division duplexing ("TDD") modes of radio interfaces.
The TSG-RAN WG1 addressed multiplexing uplink control information ("UCI") on a Physical Uplink Shared Channel ("PUSCH") in the case of a Single User-Multiple Input Multiple Output ("SU-MIMO") system. The TSF-RAN WG1 also described formulas for calculating a rank indicator ("RI"), a Channel Quality Indicator/Pre-coding Matrix Index ("CQI/PMI"), and resources per layer of acknowledgement/negative acknowledgement ("ACK/NACK") code.
However, there are certain unique scenarios for which the TSG-RAN WG1 has not described formulas for calculating the RI, the CQI/PMI, and resources per layer of ACK/NACK code. Furthermore, the ping-pong effect and settlement on multi-beta values also remain to be properly addressed. Accordingly, there is a need for improved methods for countering the ping-pong effect; selecting a code word to transmit the CQI/PMI; multiplexing UCI and data per code word; and addressing certain scenarios for determining ACK/NACK code and a RI.
"UCI Multiplexing on PUSCH with MIMO Transmission", 3GPP TSG-RAN WG1 Meeting #61bis, vol. RAN WG1, no. R1-103601, 28 June 2010 describes a number of alternative mechanisms for code word selection.

SUMMARY OF THE INVENTION

The present invention is directed toward a method of selecting a code word to transmit a channel quality indicator and pre-coding matrix index in a wireless system having user equipment in a single user-multiple output mode, as defined in claim 1.
The present invention is also direct toward a system of selecting a code word to transmit a channel quality indicator and pre-coding matrix index in a wireless system having user equipment in a single user-multiple output mode, as defined in claim 3.
Also described herein, in order to counter a ping-pong effect, an evolved Node B adjusts a modulation coding set or a transport block size of a transport block without adjusting a channel quality indicator/pre-coding matrix index.
Also described herein, in order to counter a ping-pong effect, an evolve Node B selects a transport block for channel quality indicator/pre-coding matrix index transmission. The evolved Node B may select the transport block having a highest modulation coding set index or the transport block having a lowest modulation coding set index. Alternatively, the evolved Node B may select the transport block having a largest size or the transport block having the smallest size.
Also described herein, a code word is selected to transmit a channel quality indicator/pre-coding matrix index having user equipment in a single user-multiple input multiple output mode. A first code is disabled on a control channel. The user equipment then selects a transport block to transmit the channel quality indicator/pre-coding matrix index.
Also described herein, virtual unit sequences of a channel quality indicator/pre-coding matrix index and data are multiplexed a physical downlink control channel. The virtual unit sequences are then interleaved with acknowledgement/negative acknowledgement code, a rank indicator, and new data.
Additional aspects and advantages of the improvements will appear from the description of the preferred embodiments. The invention is solely defined by the appended claims. Any other reference to embodiment(s) not falling within the scope of the claimed subject-matter is to be understood as helpful for understanding the invention.

DETAILED DESCRIPTION OF THE PREFERRED EMBODIMENTS

Unless otherwise indicated below, the ensuing description is based upon the following assumptions. First, a transport block associated with a highest modulation coding set index or largest transport block size is indicated by an uplink grant. This assumption, however, can be revisited if major performance loss is identified when compared to other approaches. Also, the first of two transport blocks is preferred when the modulation coding set ("MCS") or the transport block size is the same for both transport blocks. Finally, a CQI/PMI is transmitted on the transport block that is associated with the highest MCS index or largest transport block size. This transport block may be indicated by the uplink grant for a two transport block transmission.

*Addressing the Ping-Pong Effect*

The ping-pong effect is a situation in which an introduction of UCI reverses an order of the MCS between two transport blocks. This effect may occur when an evolved Node B ("eNB") adjusts the MCS of one of the transport blocks with UCI.

During an initial PUSCH transmission, the ping pong effect generally does not occur when CQI/PMI overhead is particularly large or small, regardless of whether the eNB takes the CQI/PMI overhead into account in link adaptation.

When the CQI/PMI overhead is large, however, the eNB may configure a larger PUSCH offset parameter (" $\beta_{offset}^{PUSCH}$

") to ensure the quality of the CQI/PMI. When the MCSs or transport block sizes of two transport blocks are relatively close, the ping pong effect may occur.

The ping-pong effect can be solved using several methods. In a first method, a baseline is not changed, and therefore does not need to be specified. For example, an eNB can adjust the MCS or transport block size of a particular transport block without adjusting a CQI/PMI. This method, however, may impact a data block error ratio (BLER).

In a second method, the ping-pong effect may be solved by standardized methods that reduce the impact on data. Under one such standardized method, when certain conditions are satisfied, (e.g. when the MCS index of one of the transport blocks remains the highest after multiplexing with UCI) the transport block with the highest MCS or largest transport block size is chosen for CQI/PMI transmission. Otherwise, the transport block with the lowest MCS index or smallest transport block size is chosen for CQI/PMI transmission. This method, however, is fairly complex.

In another standardized method, a transport block chosen for CQI/PMI transmission may be indicated through an uplink grant. For example, a 1 bit transport block to code word swap, a 1 bit hopping flag, or other indicator may be used. These bits may be used to indicate the transport block chosen for CQI/PMI transmission or to indicate a chosen scheme when the ping pong effect occurs. For example, by default, the CQI will be transmitted via the code word associated with a higher MCS index, but if the transport block to code word swap bit is set, then it is transmitted via the code word associated with a lower MCS index.

The ping-pong effect generally does not occur during PUSCH retransmission because an eNB does not need to consider the CQI/PMI overhead of an initial transmission of the same PUSCH. The effect is also nonexistent because the transport block size of a transport block for retransmission is the same as for the initial transmission.

*Selecting a Code Word for CQI/PMI Transmission*

In a first scenario, user equipment is in a SU-MIMO mode with little data to be transmitted. If one code word is disabled by a physical downlink control channel ("PDCCH"), a CQI/PMI can be multiplexed on an enabled code word's corresponding transport block. Otherwise, if one code word is enabled for UCI transmission only, the CQI/PMI should be transmitted on the enabled code word's corresponding transport block and data should be transmitted on another code word's corresponding transport block.

Similar to the first scenario above, in a second scenario, user equipment is in a SU-MIMO mode. However, in this second scenario, no data is to be transmitted. If one code word is disabled by a PDCCH, a CQI/PMI can be transmitted on an enabled code word's corresponding transport block. Otherwise, the user equipment can select a first transport block to transmit the CQI/PMI.

In a third scenario, a MCS or transport block size is the same for both transport blocks. In this case, user equipment can, like in the second scenario above, select a first transport block to transmit a CQI/PMI.

*Multiplexing for UCI and Data per Code Word*

UCI and data of different layers belong to a particular transport block that constitutes sequences of a virtual unit. These virtual unit sequences are multiplexed according to a method described in 3GPP Release 8 (Rel-8). An output of these multiplexed virtual unit sequences is a virtual unit sequence of new data. If the particular transport block is not selected for a CQI/PMI, the virtual unit sequence of new data is the same as the virtual unit sequence of data prior to being multiplexed.

A virtual unit sequence of ACK/NACK code, an RI, and/or new data is interleaved according to a method described in Rel-8. The size of the interleaver is C*R, where C represents a sub-carrier number for use and R represents the single carrier-frequency-division multiple access (SC-FDMA). The output of the interleaver is a virtual unit sequence with length C*R, read column-by-column.

With this method, the processing of data and control multiplexing and channel interleaving can be reused in accordance with Rel-8. However, this method needs to constitute a virtual unit sequence which can be processed through channel coding. For example, in Rel-8, a vector sequence output of channel coding for RI is denoted by

$\underline{q}_0^{RI}, \underline{q}_1^{RI}, ..., \underline{q}_{Q'_{RI}-1}^{RI}$, where $Q'_{RI} = Q_{RI} / Q_m$ and $\underline{q}_k^{RI} = [q_i^{RI} ... q_{i+Q_m-1}^{RI}]^T$. In 3GPP Release 10 (Rel-10), the virtual unit sequence output of channel coding for rank information is

$$\underline{\underline{q}}_k^{RI} = [\underline{q}_{.k}^{RI_{layer0}} \ \underline{q}_k^{RI_{layer1}}] = [q_i^{RI_{layer0}} ... q_{i+Q_m-1}^{RI_{layer0}} q_i^{RI_{layer1}} ... q_{i+Q_m-1}^{RI_{layer1}}]^T.$$

*Calculating Resources per Layer of ACK/NACK and RI*

In a first scenario, $\sum_{i=0}^{C^{(l)}-1} K_r^{(i)}$ which calculates resources per layer of ACK/NACK and RI, in the equation

$$Q' = \min\left\{\left[\frac{O \cdot M_{sc}^{PUSCH-initial} \cdot N_{symb}^{PUSCH-initial} \cdot \beta_{offset}^{PUSCH}}{\sum_{n=1}^{N_{TB}} \sum_{r=0}^{C^{(n)}-1} K_r^{(n)}}\right], 4 \cdot M_{sc}^{PUSCH}\right\},$$

$$\beta_{offset}^{PUSCH} = \begin{cases} \beta_{offset\_one\_CW}^{ACK} & N_{TB} = 1 \\ \beta_{offset\_n\_CW}^{ACK} & N_{TB} > 1 \end{cases}$$ can instead be $O_{CQ1-min}$, where a transport block is only for CQI/PMI transmission.

In the above equations, O is the number of ACK/NACKs, RIs, or CQI bits; $M_{sc}^{PUSCH-initial}$ is an initially scheduled bandwidth for the same transport block expressed as number of subcarriers;

$$M_{sc}^{PUSCHl}$$

is the scheduled bandwidth for the current PUSCH in the unit of subcarriers; C is the number of code blocks for the transport block; K, is the number of bits for code block number r; $\beta_{offset}^{PUSCHl}$ is the offsets configured by higher layers; $N_{symb}^{PUSCH-initial}$ is the number of single carrier-frequency division multiplexing (SC-FDM) symbols in a subframe for initial PUSCH transmission; $N_{symb}^{PUSCH}$ is the number of SC-FDM symbols in the current PUSCH transmission subframe; L is the number of cyclic redundancy check ("CRC") bits (L=8 for CQI); $\beta_{offset\_one\_CW}^{ACK}$ is the offset value for single layer transmission configured by higher layer; $\beta_{offset\_n\_CW}^{ACK}$ is the offset value for multiple layer transmission configured by higher layer; and $N_{TB}$ is the number corresponding to a particular transport block.

In a second scenario, formulas to calculate resources per layer of ACK/NACK and RI are the same as for calculating the resources of ACK/NACK and RI without data in Rel-8.

While embodiments of this invention have been shown and described, it will be apparent to those skilled in the art that many more modifications are possible without departing from the inventive concepts herein. The invention, therefore, is defined only by the following claims.

**Claims**

1.  A method of selecting a code word to transmit a channel quality indicator and pre-coding matrix index in a wireless system having user equipment in a single user-multiple input multiple output mode, the method comprising:

    selecting, by the user equipment, a transport block from among a plurality of transport blocks, wherein the transport block is configured to transmit the channel quality indicator and pre-coding matrix index, **characterized in that**
    the selected transport block is a transport block that is associated with the largest transport block size.

2.  The method of claim 1, wherein the plurality of transport blocks have the same transport block size, and the first of the plurality of transport blocks is selected.

3.  A system of selecting a code word to transmit a channel quality indicator and pre-coding matrix index in a wireless system having user equipment in a single user-multiple input multiple output mode, the system comprising:

    means for selecting a transport block from among a plurality of transport blocks, wherein the transport block is configured to transmit the channel quality indicator and pre-coding matrix index, **characterized in that**
    the means for selecting a transport block from among the plurality of transport blocks is configured to select a transport block that is associated with the largest transport block size.

4.  The system of claim 3, wherein the plurality of transport blocks have the same transport block size, and means for selecting the transport block from the plurality of transport blocks is configured to select the first of the plurality of transport blocks.

**Patentansprüche**

1.  Verfahren zum Auswählen eines Codeworts zum Übertragen eines Kanalqualitätsindikators und eines Vorcodierungs-Matrixindex in einem drahtlosen System, das Benutzerendgeräte in einem Einzelnutzer-Mehrfacheingabe-Mehrfachausgabemodus aufweist, wobei das Verfahren umfasst:

    Auswählen eines Transportblocks aus einer Mehrzahl von Transportblöcken durch das Benutzerendgerät, wobei der Transportblock konfiguriert ist, um den Kanalqualitätsindikator und den Vorkodierungs-Matrixindex zu übertragen,
    **dadurch gekennzeichnet, dass**
    der ausgewählte Transportblock ein Transportblock ist, der mit der größten Transportblockgröße verknüpft ist.

2.  Verfahren nach Anspruch 1, bei dem die Mehrzahl von Transportblöcken die gleiche Transportblockgröße hat, und aus der Mehrzahl von Transportblöcken der erste ausgewählt wird.

3.  System zum Auswählen eines Codeworts zum Übertragen eines Kanalqualitätsindikators und eines Vorcodierungs-Matrixindex in einem drahtlosen System, das Benutzerendgeräte in einem Einzelnutzer-Mehrfacheingabe-Mehrfachausgabemodus aufweist, wobei das System umfasst:

    Mittel zum Auswählen eines Transportblocks aus einer Mehrzahl von Transportblöcken, wobei der Transportblock konfiguriert ist, um den Kanalqualitätsindikator und den Vorkodierungs-Matrixindex zu übertragen,
    **dadurch gekennzeichnet, dass** das Mittel zum Auswählen eines Transportblocks aus der Mehrzahl von Transportblöcken konfiguriert ist, um einen Transportblock auszuwählen, der mit der größten Transportblockgröße verknüpft ist.

4.  System nach Anspruch 3, bei dem die mehreren Transportblöcke die gleiche Transportblockgröße haben, und das Mittel zur Auswahl des Transportblocks aus der Mehrzahl der Transportblöcke konfiguriert ist, um den ersten der Mehrzahl der Transportblöcke auszuwählen.

**EP 2 418 797 B1**

**Revendications**

1. Procédé de sélection d'un mot de code pour transmettre un indicateur de qualité de canal et un indice de matrice de précodage dans un système sans fil ayant un équipement utilisateur dans un mode entrées multiples sorties multiples utilisateur unique, le procédé comprenant l'étape consistant à :

   sélectionner, par l'équipement utilisateur, un bloc de transport parmi une pluralité de blocs de transport, où le bloc de transport est configuré pour transmettre l'indicateur de qualité de canal et l'indice de matrice de précodage, **caractérisé en ce que**
   le bloc de transport sélectionné est un bloc de transport qui est associé à la plus grande taille de bloc de transport.

2. Procédé de la revendication 1, dans lequel la pluralité de blocs de transport ont la même taille de bloc de transport, et le premier de la pluralité de blocs de transport est sélectionné.

3. Système de sélection d'un mot de code pour transmettre un indicateur de qualité de canal et un indice de matrice de précodage dans un système sans fil ayant un équipement utilisateur dans un mode entrées multiples sorties multiples utilisateur unique, le système comprenant :

   un moyen pour sélectionner un bloc de transport parmi une pluralité de blocs de transport, où le bloc de transport est configuré pour transmettre l'indicateur de qualité de canal et l'indice de matrice de précodage, **caractérisé en ce que**
   le moyen de sélection d'un bloc de transport parmi la pluralité de blocs de transport est configuré pour sélectionner un bloc de transport qui est associé à la plus grande taille de bloc de transport.

4. Système de la revendication 3, dans lequel la pluralité de blocs de transport ont la même taille de bloc de transport, et un moyen pour sélectionner le bloc de transport parmi la pluralité de blocs de transport est configuré pour sélectionner le premier de la pluralité de blocs de transport.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- UCI Multiplexing on PUSCH with MIMO Transmission. *3GPP TSG-RAN WG1 Meeting #61bis,* 28 June 2010